# EUROPÄISCHE PATENTSCHRIFT

(11) **EP 2 456 571 B1**
(45) Veröffentlichungstag und Bekanntmachung des Hinweises auf die Patenterteilung: **14.10.2015**
(21) Anmeldenummer: 10725955.8
(22) Anmeldetag: 21.06.2010
(51) Int. Cl.: A61C 5/06, B05C 17/01, B05C 17/005

(54) **DOSIERDISPENSER**
METERING DISPENSER
DISTRIBUTEUR DOSEUR

(30) Priorität: 22.07.2009 CH 11512009
(43) Veröffentlichungstag der Anmeldung: 30.05.2012
(73) Patentinhaber: Medmix Systems AG, 6343 Rotkreuz (CH)
(72) Erfinder: VUKIC, Mathey, CH-6340 Baar (CH); GRETER, Andy, CH-6340 Baar (CH)
(74) Vertreter: Detken, Andreas
(86) Internationale Anmeldenummer: PCT/CH2010/000159
(87) Internationale Veröffentlichungsnummer: WO 2011/009221

(56) Entgegenhaltungen:
- CH-A5- 641 736
- US-A- 4 744 494
- US-B2- 6 450 370

## Beschreibung

### TECHNISCHES GEBIET

Die vorliegende Erfindung betrifft eine Austragvorrichtung, bei der ein Vorschubelement durch die Betätigung eines Hebels schrittweise vorgeschoben wird, um mindestens eine Komponente aus der Austragvorrichtung auszutragen. Eine solche Austragvorrichtung wird auch als Dosierdispenser bezeichnet.

### STAND DER TECHNIK

Aus dem Stand der Technik sind verschiedene Arten von Dosierdispensern bekannt, die meist pistolenartig aufgebaut sind. Solche Dosierdispenser dienen dazu, eine oder mehrere Komponenten aus einem Behälter auszutragen, der meistens in Form einer Einfach- oder Doppelspritze bzw. einer entsprechenden Kartusche ausgestaltet ist.

So offenbart US 5,992,694 einen Dosierdispenser der genannten Art, bei dem zwei Komponenten in zwei zylindrischen Spritzenkörpern einer Kartusche vorliegen. In den Spritzenkörpern sind Spritzenkolben verschiebbar, um die Komponenten aus den Spritzenkörpern auszutragen. Ein Vorschubelement in Form einer Doppelschubstange dient dazu, die Spritzenkolben in den Spritzenkörpern vorzuschieben. Dieses Vorschubelement weist auf seiner Unterseite eine Verzahnung auf. Der Dosierdispenser weist einen pistolenartigen Handgriff auf. Ein Betätigungshebel ist schwenkbar am Handgriff angelenkt. Wenn der Betätigungshebel in Richtung des Handgriffs gedrückt wird, wirkt dieser auf ein verzahntes Mitnahmeelement, das mit der Doppelschubstange in Eingriff steht und die vorschiebt. Wenn der Betätigungshebel anschliessend wieder losgelassen wird, gelangt er durch eine Federkraft in seine Ausgangsstellung zurück. Dabei führt das Mitnahmeelement eine Schwenkbewegung aus und gerät ausser Eingriff mit der Verzahnung mit der Doppelschubstange. Zwischen dem Betätigungshebel und dem Mitnahmeelement ist eine Ausgleichslasche drehbeweglich angelenkt, um die Bogenbewegung des Betätigungshebels über den Verlauf der Betätigungsbewegung auszugleichen. Dadurch werden Relativbewegungen zwischen den Zähnen des Mitnahmeelements und den Zähnen der Doppelschubstange vermieden. Allerdings resultiert dadurch auch ein verhältnismässig komplizierter Aufbau des Dosierdispensers.

In US 5,464,131 ist ebenfalls ein Dosierdispenser der geschilderten Art offenbart. Der Betätigungshebel dieses Dispensers ist mit seiner Schwenkachse an zwei im Dispenser vertikal verschiebbaren Blöcken angelenkt. Der Betätigungshebel ist ausserdem mit einem Ende an einem im Dispenser horizontal verschiebbar geführten Mitnehmerschlitten angelenkt, der mit der Doppelschubstange in Eingriff steht. Wenn der Betätigungshebel betätigt wird, verschiebt er durch seine Schwenkbewegung den Mitnehmerschlitten und schiebt so die Doppelschubstange in der Vorschubrichtung vor. Um dabei die unvermeidliche Bogenbewegung des Punktes, an dem der Mitnehmerschlitten angelenkt ist, auszugleichen, bewegt sich die Schwenkachse des Betätigungshebels mittels der verschiebbaren Blöcke nach unten. Wenn der Betätigungshebel wieder losgelassen wird, gelangt er federbelastet wieder in seine Ausgangsstellung zurück. Dabei gleitet der Mitnehmerschlitten auf Grund einer asymmetrischen Ausgestaltung der Verzahnung wieder nach hinten in die Ausgangsstellung, während die Doppelschubstange stationär bleibt. Auch dieser Mechanismus ist relativ kompliziert und erfordert eine erhebliche Zahl von Einzelteilen.

In US 2008/0 114 315 ist ein Dispenser offenbart, bei dem der Betätigungshebel direkt mit einer Verzahnung einer Vorschubstange zusammen wirkt. Dazu weist der Hebel offenbar einen federbelasteten, teleskopierbaren Mitnehmer auf, der bei der Zurückbewegung des Hebels in seine Ausgangsstellung über die asymmetrisch ausgestaltete Verzahnung der Vorschubstange hinweg gleitet.

In GB 1 198 214 ist ein Dispenser offenbart, bei dem am Betätigungshebel eine Mitnehmerklinke schwenkbar angelenkt ist und in Richtung einer Vorschubstange mit einer Verzahnung federbelastet ist. Bei der Zurückbewegung des Betätigungshebels gleitet die Mitnehmerklinke über die asymmetrisch ausgestaltete Verzahnung hinweg. Ein Mechanismus mit einer federbelasteten Klinke ist auch in US-6,585,696 offenbart

Alle die vorgenannten Dispenser sind jedoch relativ kompliziert aufgebaut und bestehen aus einer Vielzahl von Teilen. Sie eignen sich daher insbesondere nicht zum einmaligen Einsatz als Wegwerfartikel.

Die US 4,744,494 offenbart einen Dispenser, bei dem ein relativ zu einem Gehäuse verschwenkbarer Betätigungshebel vorgesehen ist, welcher beim Verschwenken mit einem flexiblen Zahn in die Rastzähne eines Vorschubelementes eingreift und dieses dadurch vorschiebt. Beim anschliessenden Loslassen des Betätigungshebels gleitet der flexible Zahn über die Rastzähne des Vorschubelementes hinweg bis er ausser Eingriff mit diesen gerät. Dadurch, dass der Zahn des Vorschubelementes flexibel ausgebildet ist, ist die maximal vom Betätigungshebel auf das Vorschubelement übertragbare Kraft jedoch begrenzt.

### DARSTELLUNG DER ERFINDUNG

Es ist daher eine Aufgabe der vorliegenden Erfindung, eine Austragvorrichtung nach Art eines Dosierdispensers anzugeben, die einfach ausgebildet ist, kostengünstig gefertigt werden kann und sich grundsätzlich dazu eignet, als Wegwerfartikel zum einmaligen Gebrauch gefertigt zu werden. Diese Aufgabe wird durch eine Austragvorrichtung mit den Merkmalen des Anspruchs 1 gelöst. Weitere Ausführungsformen sind in den abhängigen Ansprüchen angegeben.

Es wird also eine Austragvorrichtung (ein Dispenser) zum Austragen mindestens einer Komponente angegeben, die Folgendes aufweist:
einen Basiskörper;
ein gegenüber dem Basiskörper verschiebbar geführtes Vorschubelement, das dazu ausgebildet ist, auf einen Behälter mit der Komponente einzuwirken, um die Komponente durch einen Vorschub des Vorschubelements in eine Vorschubrichtung aus dem Behälter auszutragen, wobei das Vorschubelement eine Verzahnung entlang der Vorschubrichtung aufweist (d.h. das Vorschubelement weist entlang der Vorschubrichtung eine Vielzahl von Zähnen auf);
einen Betätigungshebel, der gegenüber dem Basiskörper zwischen einer Ausgangsstellung und einer aktivierten Stellung verschwenkbar ist und einen oder mehrere Zähne aufweist, die geeignet sind, mit der Verzahnung des Vorschubelements in Eingriff zu treten, so dass das Vorschubelement durch eine Schwenkbewegung des Betätigungshebels in die Vorschubrichtung bewegbar ist.

Dabei ist der Betätigungshebel als Ganzes gegenüber dem Basiskörper zwischen einer eingreifenden Stellung, in der die Zähne des Betätigungshebels mit der Verzahnung des Vorschubelements in Eingriff stehen, und einer ausgekoppelten Stellung, in der die Zähne des Betätigungshebels mit der Verzahnung des Vorschubelements ausser Eingriff stehen, bewegbar.

Wenn der Betätigungshebel von der Ausgangsstellung in die aktivierte Stellung verschwenkt wird, befindet sich also der Betätigungshebel mit seinen Zähnen in Eingriff mit der Verzahnung des Vorschubelements und schiebt das Vorschubelement um einen definierten Betrag in die Vorschubrichtung vor. Dabei wird eine vorbestimmte Menge (Dosis) der Komponente ausgetragen, wobei diese Menge durch den Schwenkbereich des Hebels und die Hebeluntersetzung vorgebbar ist. Der Dispenser kann daher auch als Dosierdispenser bezeichnet werden. Wenn der Betätigungshebel danach von der aktivierten Stellung in die Ausgangsstellung zurückbewegt wird, soll das Vorschubelement stationär bleiben. Dazu geraten die Zähne des Betätigungshebels ausser Eingriff mit der Verzahnung des Vorschubelements. Bei der vorliegenden Erfindung wird dies dadurch ermöglicht, dass der gesamte Betätigungshebel relativ zum Basiskörper auf die Verzahnung zu bzw. von der Verzahnung weg bewegbar, insbesondere verschiebbar ist. Der Betätigungshebel bildet dabei vorzugsweise eine starre, formstabile Einheit, und die Zähne des Betätigungshebels sind vorzugsweise relativ zum restlichen Betätigungshebel unbeweglich. Sie können insbesondere integral am Betätigungshebel ausgebildet sein.

Insbesondere verändert sich bei der Bewegung des Betätigungshebels als Ganzes die Lage der Schwenkachse, d.h. der gedachten Linie, um die herum die Schwenkbewegung des Betätigungshebels erfolgt. Letztlich zeichnet sich der Betätigungshebel also dadurch aus, dass seine Schwenkachse relativ zum Basiskörper auf die Verzahnung zu bzw. von der Verzahnung weg bewegbar ist. Dies kann dadurch realisiert sein, dass der Betätigungshebel ein Achselement aufweist, das am Basiskörper verschiebbar geführt ist. Die Bewegbarkeit als Ganzes kann aber auch auf andere Weise realisiert sein als durch ein solches Achselement, z.B. über eine Kulissenführung.

Indem der Betätigungshebel als Ganzes verschiebbar gegenüber dem Basiskörper ist, können komplizierte Massnahmen zum Ausgleich der Bogenbewegung, wie sie im Stand der Technik vorgeschlagen wurden, entfallen, wie z.B. ein Mitnehmerschlitten, ein teleskopierbarer Bereich des Hebels, an dem die Zähne ausgebildet sind, oder eine schwenkbare Mitnehmerklinke, die mit dem Hebel verbunden ist. Der Aufbau des Dispensers wird dadurch erheblich vereinfacht. Ein solcher Dispenser kann aus wenigen, kostengünstigen Teilen hergestellt werden und kann insbesondere als Wegwerfprodukt vorgesehen sein. Dies ist vor allem in medizinischen Anwendungen von Vorteil, da der Dispenser schon ab Werk sterilisiert werden kann und steril ausgeliefert werden kann. Eine aufwändige Sterilisation durch den Benutzer, wie sie bei mehrfach zu verwendenden Dispensern im medizinischen Bereich meist erforderlich ist, kann dadurch entfallen.

Um eine automatische Rückstellung des Betätigungshebels zu ermöglichen, ist der Betätigungshebel bevorzugt in Richtung der Ausgangsstellung federbelastet. Ausserdem ist der Betätigungshebel als Ganzes, insbesondere seine Schwenkachse, bevorzugt in Richtung der eingreifenden Stellung federbelastet, um sicherzustellen, dass der Hebel bei der Bewegung von der Ausgangsstellung in die aktivierte Stellung in Eingriff mit der Verzahnung des Vorschubelements steht. Jede dieser Funktionen kann durch jeweils eine separate Feder realisiert sein. Diese beiden Funktionen sind jedoch vorzugsweise gemeinsam durch eine gemeinsame Feder realisiert, die sowohl eine erste Kraftkomponente erzeugt, um den Betätigungshebel in Richtung der Ausgangsstellung zu belasten, als auch eine zweite Kraftkomponente, um den Betätigungshebel in Richtung der eingreifenden Stellung zu belasten. Selbstverständlich können mehrere solche Federn parallel zueinander vorgesehen sein, um die Federkraft zu erhöhen und Redundanz zu erreichen. Als Feder kommen beliebige Federn in Betracht, wie sie aus dem Stand der Technik bekannt sind, insbesondere eine V-förmig gebogene Blattfeder, wobei ein Schenkel der Blattfeder am Basiskörper und der andere Schenkel am Betätigungshebel angreift, eine Spiralfeder, deren eines freie Ende am Basiskörper und deren anderes freie Ende am Betätigungshebel angreift, eine in geeigneter Orientierung zwischen Basiskörper und Betätigungshebel angebrachte Schraubenfeder, die auf Zug oder auf Druck wirken kann, usw.

Um zu verhindern, dass das Vorschubelement bei der Rückstellbewegung des Betätigungshebels wieder entgegen der Vorschubrichtung mitgenommen wird, weist die Austragvorrichtung vorzugsweise ausserdem eine Rücklaufsperreinrichtung auf, welche eine Bewegung des Vorschubelements in der Vorschubrichtung zulässt, aber entgegen der Vorschubrichtung mindestens behindert, vorzugsweise vollständig verhindert. Dadurch wird ein Rücklauf des Vorschubelements während der Rückbewegung des Betätigungshebels von der aktivierten Stellung in die Ausgangsstellung verhindert. Dazu weist die Rücklaufsperreinrichtung vorzugsweise ein Sperrelement auf, das geeignet ist, in die Verzahnung des Vorschubelements einzugreifen, und das gegenüber dem Basiskörper in Richtung der Verzahnung federbelastet ist. Bei dem Sperrelement kann es sich z.B. um einen relativ zum Basiskörper verschiebbar angeordneten Schlitten mit einem oder mehreren Zähnen handeln, der mit einer Druckfeder auf die Verzahnung des Vorschubelements zu belastet ist. Alternativ sind z.B. auch eine federbelastete, schwenkbare Sperrklinke oder ein Federarm mit einem Eingriffselement an seinem freien Ende denkbar, wie dies aus dem Stand der Technik in verschiedensten Ausgestaltungen bekannt ist.

Um einen sicheren Vorschub und gleichzeitig eine besonders einfache Rückstellung des Vorschubelements zu ermöglichen, sind die Zähne der Verzahnung des Vorschubelements vorzugsweise asymmetrisch ausgebildet, d.h. jeder Zahn weist eine vordere Flanke auf, die in die Vorschubrichtung weist, und eine hintere Flanke, die in eine der Vorschubrichtung entgegengesetzte Richtung weist, wobei die vordere Flanke einen flacheren Winkel zur Vorschubrichtung einnimmt als die hintere Flanke. Ein besonders sicherer Vorschub wird ermöglicht, wenn die hintere Flanke einen Winkel zur Vorschubrichtung einnimmt, der grösser als 90° ist, d.h. wenn die Zähne hakenartig ausgebildet sind, so dass die hintere Flanke mit ihrem Normalenvektor zum Vorschubelement selbst hin weist.

Um eine einfache Handhabung zu ermöglichen, weist der Basiskörper vorzugsweise einen pistolengriffartigen Handgriff auf, der dazu ausgebildet ist, mit einer Hand eines Benutzers ergriffen zu werden, und der Betätigungshebel weist einen Betätigungsbereich auf, der dazu ausgebildet ist, mit einem oder mehreren Fingern dieser Hand in Richtung des Handgriffs gezogen zu werden, um den Betätigungshebel von der Ausgangsstellung in die aktivierte Stellung zu verschwenken. Entsprechende Ausgestaltungen des Griffbereichs als länglicher Hebelarm, als kreisrunder oder beliebig geformter Ring usw. sind aus dem Stand der Technik an sich bekannt.

Bevorzugt sind die Zähne des Betätigungshebels bezüglich der (gedachten) Schwenkachse an einer dem Griffbereich gegenüberliegenden Oberseite des Betätigungshebels angeordnet (insbesondere sind der Betätigungsbereich und ein Bereich, an dem Zähne angeordnet sind, also bezüglich der Schwenkachse an gegenüberliegenden Hebelarmen ausgebildet), und die Verzahnung des Vorschubelements ist an einer zum Handgriff hin weisenden Unterseite des Vorschubelements angeordnet. Der Betätigungshebel wird also nach unten bewegt, wenn er ausser Eingriff mit dem Vorschubelement gerät. Es ist aber auch denkbar, die Verzahnung anders anzuordnen. So ist es z.B. denkbar, dass die Verzahnung auf der Oberseite des Vorschubelements, die vom Handgriff weg weist, angeordnet ist, und dass der Betätigungshebel das Vorschubelement seitlich derart umgreift, dass seine Zähne von oben her in diese Verzahnung eingreifen. Der Betätigungshebel bewegt sich dann nach oben, wenn die Zähne ausser Eingriff mit der Verzahnung gelangen.

In einer besonders einfachen Ausgestaltung weist der Betätigungshebel mindestens ein Achselement auf, das in mindestens einem Langloch des Basiskörpers verschiebbar geführt ist, um den Betätigungshebel als Ganzes zwischen der eingreifenden Stellung und der ausgekoppelten Stellung zu verschieben. Das Langloch kann in einer Richtung, insbesondere nach unten, offen sein, um den Betätigungshebel besonders einfach mit dem Basiskörper verbinden zu können. Es kann aber auch an seinen beiden Enden geschlossen sein. In diesem Fall ist es denkbar, dass ein Achselement bei der Montage seitlich durch das Langloch durchgeschoben wird. Es ist aber auch möglich, dass solche Langlöcher z.B. an zwei Seitenwänden des Basiskörpers vorhanden sind und dass der Betätigungshebel mit seinen integral ausgebildeten, federbelasteten Achselementen gegen eine Federkraft in diese Langlöcher eingeklickt wird, gegebenenfalls mit Hilfe von geeigneten Führungsnuten auf der Innenseite des Basiskörpers, die von einem Rand des Basiskörpers zum Langloch hin führen. Alternativ ist z.B. auch insgesamt eine Führung des Achselements in langlochartigen Führungsnuten am Basiskörper möglich. Statt am Betätigungshebel kann ein Achselement aber auch am Basiskörper ausgebildet sein, und der Betätigungshebel kann entsprechend ein Langloch bzw. Führungsnuten aufweisen.

Bevorzugt umfasst die Austraganordnung ausserdem einen Behälter zu Aufnahme der Komponente(n). Dieser ist vorzugsweise als zylindrischer Spritzenkörper zur Aufnahme der mindestens einen Komponente mit einem im Spritzenkörper verschiebbaren Spritzenkolben ausgebildet, wobei der Spritzenkolben durch das Vorschubelement im Spritzenkörper vorschiebbar ist, um die Komponente auszutragen. Der Behälter kann aber auch eine andere Form annehmen. Vorzugsweise ist der Behälter, insbesondere der Spritzenkörper, integral mit dem Basiskörper ausgebildet, was die Herstellungskosten nochmals senkt und wodurch ein mögliches unerwünschtes Spiel zwischen Dispenser und Behälter vermieden wird.

In bevorzugten Ausführungsformen handelt es sich bei dem Dispenser um einen Mehrkomponenten-Dispenser zum simultanen Austragen von zwei oder mehr Komponenten, die anschliessend in einem Mischer gemischt werden. Dazu weist der Dispenser mindestens einen ersten zylindrischen Spritzenkörper mit einem darin verschiebbaren ersten Spritzenkolben und einen parallel zum ersten Spritzenkörper angeordneten zweiten zylindrischen Spritzenkörper mit einem darin verschiebbaren zweiten Spritzenkolben auf. Die Spritzenkörper können getrennt voneinander ausgebildet sein oder nach Art einer Kartusche miteinander verbunden sein. Bevorzugt sind sie integral mit dem Basiskörper ausgebildet.

Das Vorschubelement umfasst dann vorzugsweise mindestens eine erste Kolbenstange, die mit einem distalen Ende auf den ersten Spritzenkolben wirkt, eine zweite Kolbenstange, die mit einem distalen Ende auf den zweiten Spritzenkolben wirkt, und einen Verbindungsbereich zwischen den Kolbenstangen, der in einem proximalen Endbereich der Kolbenstangen ausgebildet ist, um die Kolbenstangen miteinander zu verbinden. Dabei können die Kolbenstangen lose auf den Spritzenkolben aufliegen oder mit diesen verbunden sein. In einer materialsparenden Ausgestaltung ist die Verzahnung des Vorschubelements unmittelbar auf der ersten und der zweiten Kolbenstange ausgebildet. Es kann aber auch ein separater Stössel mit der Verzahnung vorhanden sein, der parallel zu den beiden Kolbenstangen verläuft.

Der Basiskörper bildet vorzugsweise ein Gehäuse, durch das hindurch sich das Vorschubelement erstreckt. In einer vorteilhaften Ausgestaltung ist das Vorschubelement in einem separat vom Basiskörper ausgebildeten und am Basiskörper befestigbaren Führungselement verschiebbar geführt. Das Führungselement kann insbesondere in das vom Basiskörper gebildete Gehäuse einschiebbar sein. Am Führungselement kann integral oder getrennt von diesem die schon erwähnte Rücklaufsperreinrichtung ausgebildet sein. Insbesondere kann die Rücklaufsperreinrichtung einen oder mehrere am Führungselement integral ausbildete Federarme umfassen, an deren freien Enden jeweils eine Eingriffsstruktur zum Eingriff in die Verzahnung des Führungselements ausgebildet ist. Das Vorschubelement kann aber auch unmittelbar am Basiskörper selbst verschiebbar geführt sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Dosierdispensers mit daran befestigtem Mischer;
- Fig. 2: eine Explosionsansicht von verschiedenen Teilen des Dosierdispensers der Fig. 1;
- Fig. 3: eine Seitenansicht des Dosierdispensers der Fig. 1;
- Fig. 4: einen Ausschnitt aus einem Längsschnitt durch den Dosierdispenser der Fig. 1 in einer Ebene, die zentral durch den zweiten Spritzenkörper verläuft;
- Fig. 5: eine Detailansicht der Fig. 4 im Bereich des Eingriffs zwischen Vorschubelement und Betätigungshebel;
- Fig. 6: eine Detailansicht der Fig. 3 im Bereich der Schwenkachse des Betätigungshebels;
- Fig. 7: eine Seitenansicht des Dosierdispensers der Fig. 1 in einem aktivierten Zustand;
- Fig. 8: einen Ausschnitt aus einem Längsschnitt durch den Dosierdispenser im Zustand der Fig. 7 in einer Ebene, die zentral durch den zweiten Spritzenkörper verläuft;
- Fig. 9: eine Detailansicht der Fig. 8 im Bereich des Eingriffs zwischen Vorschubelement und Betätigungshebel;
- Fig. 10: eine Detailansicht der Fig. 7 im Bereich der Schwenkachse des Betätigungshebels;
- Fig. 11: eine Seitenansicht des Dosierdispensers nach dem Loslassen des Betätigungshebels;
- Fig. 12: einen Ausschnitt aus einem Längsschnitt durch den Dosierdispenser in der Stellung der Fig. 11 in einer Ebene, die zentral durch den zweiten Spritzenkörper verläuft;
- Fig. 13: eine Detailansicht der Fig. 12 im Bereich des Eingriffs zwischen Vorschubelement und Betätigungshebel; sowie
- Fig. 14: eine Detailansicht der Fig. 11 im Bereich der Schwenkachse des Betätigungshebels.

### BESCHREIBUNG BEVORZUGTER AUSFÜHRUNGSFORMEN

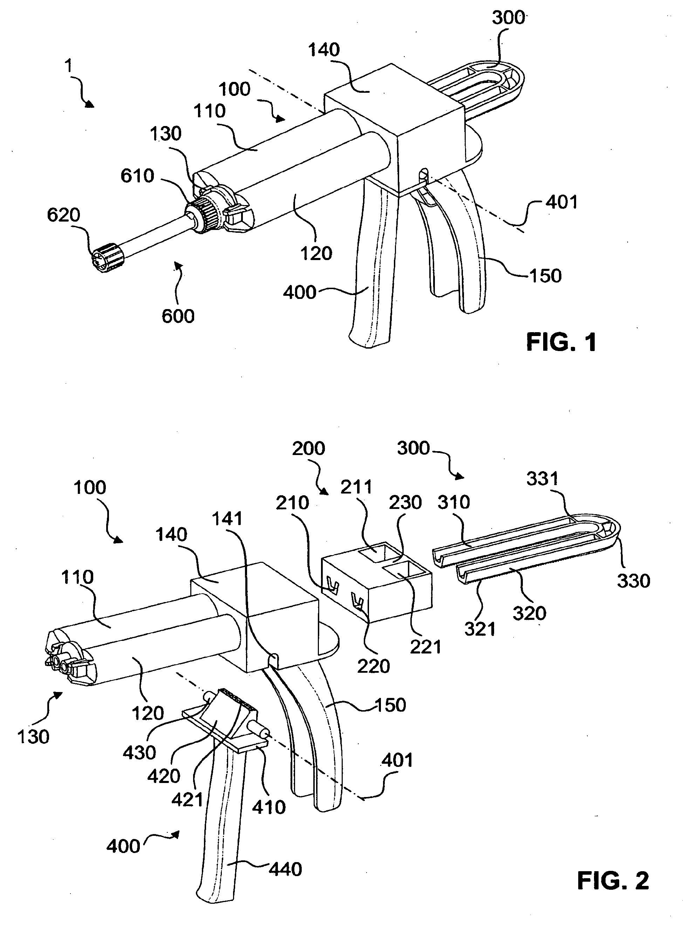

In der Fig. 1 ist eine erfindungsgemässe Austragvorrichtung in Form eines Dosierdispensers dargestellt. Der Dosierdispenser 1 weist eine Basiseinheit 100 auf, welcher einen quaderförmigen, hohlen Grundkörper 140, einen ersten Spritzenkörper 110, einen zweiten Spritzenkörper 120 und einen pistolenartigen Handgriff 150 umfasst. Die Spritzenkörper sind miteinander verbunden und sind gemeinsam mit dem Grundkörper 140 verbunden. Vom Grundkörper 140 erstreckt sich der Handgriff 150 nach unten. Am vorderen (distalen) Ende der beiden Spritzenkörper 110, 120 ist ein Befestigungsbereich 130 ausgebildet, an dem ein Mischer 600 befestigt ist. Hierzu weist der Mischer 600 an seinem hinteren (proximalen) Ende einen ersten, proximalen Befestigungsbereich auf, der komplementär zum Befestigungsbereich 130 der Basiseinheit ausgebildet ist. An seinem vorderen, distalen Ende weist der Mischer einen zweiten, distalen Befestigungsbereich 620 auf, der im vorliegenden Beispiel als Luer-Lock ausgebildet ist. Der Mischer dient dazu, zwei unterschiedliche Komponenten, die in den Spritzenkörpern 110, 120 gelagert sind, nach ihrem Austrag aus den Spritzenkörpern in an sich bekannter Weise miteinander zu vermischen und das Gemisch an seinem distalen Ende abzugeben. In der Basiseinheit 100 ist ein Vorschubelement 300 verschiebbar geführt. Durch einen Betätigungshebel 400 kann das Vorschubelement 300 in die distale Richtung vorgeschoben werden.

In der Fig. 2 sind die wesentlichen Teile des Dosierdispensers in zerlegtem Zustand dargestellt. In den quaderförmigen Grundkörper 140 ist vom proximalen Ende her ein Führungselement 200 einschiebbar, in welchem das Vorschubelement 300 geführt ist. Der Grundkörper 140 bildet ein Gehäuse für das Führungselement 200 und nimmt dieses vollständig in sich auf. Das Führungselement 200 ist selbst wiederum quaderförmig. In der Vorschubrichtung weist das Führungselement zwei parallele, durchgehende Führungsöffnungen 210, 220 mit einem U- oder V-förmigen Querschnitt auf. Zwei parallele Zugangsöffnungen 211, 221 verlaufen senkrecht hierzu in der vertikalen Richtung. Zwischen den Zugangsöffnungen ist eine sich in der Vorschubrichtung und der vertikalen Richtung erstreckende Trennwand 230 ausgebildet.

Das Vorschubelement 300 weist eine erste Kolbenstange 310 und eine zweite Kolbenstange 320 auf. Die Kolbenstangen haben einen U- bzw. V-förmigen Querschnitt, der dem Querschnitt der Führungsöffnungen 210, 220 des Führungselements 200 entspricht. Dadurch sind die Kolbenstangen geführt in das Führungselement 200 einschiebbar. An ihrem hinteren, proximalen Ende sind die Kolbenstangen über einen U-förmigen Verbindungsbereich 300 miteinander verbunden. In diesem Bereich ist das Vorschubelement durch mehrere Verstärkungswände 331 verstärkt. Auf ihrer Unterseite weisen die Kolbenstangen 310, 320 eine nachfolgend noch näher beschriebene Verzahnung auf.

Der Betätigungshebel 400 weist eine Grundplatte 410 auf, von der sich ein Betätigungsbereich 440 nach unten erstreckt. Ein keilförmiger Träger 420 erstreckt sich von der Grundplatte 410 nach oben. An seiner Oberseite weist der Träger 420 mehrere Zähne 421 auf, die im Folgenden noch näher beschrieben werden. Ein Achselement 430 erstreckt sich seitlich beidseitig aus dem Träger 420 heraus. Hierbei kann es sich um ein durch den Träger hindurchgestecktes Achselement handeln, das z.B. aus Metall gefertigt sein kann. Bevorzugt ist jedoch das Achselement einstückig mit dem Hebel 400 ausgebildet und wird in diesem Fall durch zwei an gegenüber liegenden Seiten seitlich aus dem Träger 420 hervorstehende Stifte gebildet.

Der Grundkörper 140 ist in seinem vorderen Bereich nach unten hin offen. In den Seitenwänden des Grundkörpers 140 sind zwei Ausnehmungen 141 ausgebildet, die die Form eines auf dem Kopf stehenden U aufweisen und die jeweils ein nach unten offenes Langloch bilden. In die Ausnehmungen 141 ist von unten her das Achselement 430 des Betätigungshebels 400 einschiebbar.

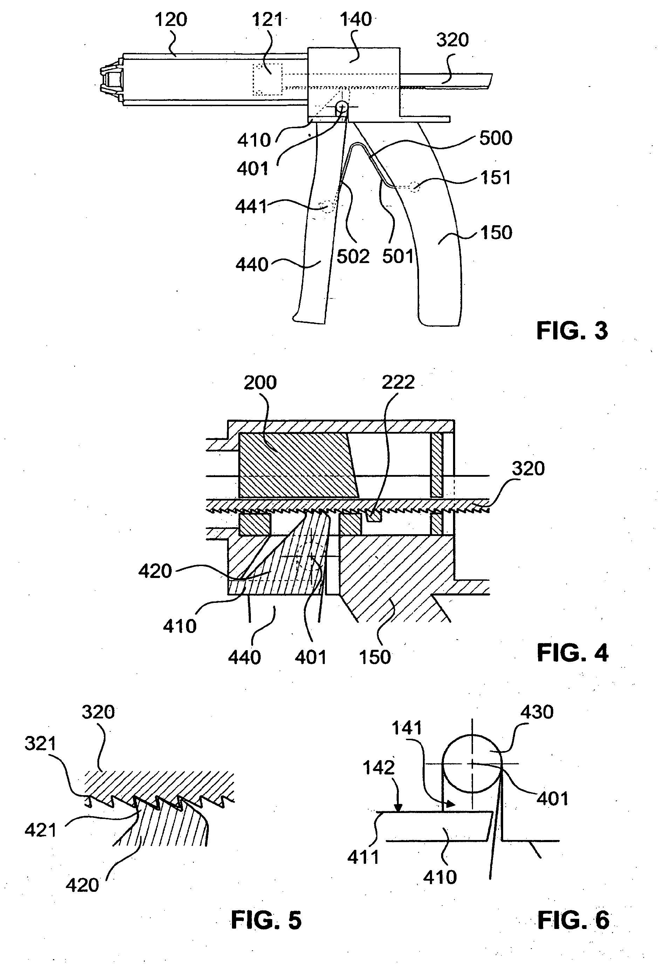

In den Figuren 3 bis 6 ist der Dosierdispenser in seinem Ausgangszustand in verschiedenen Darstellungen illustriert. Das Führungselement 200 ist vom proximalen Ende her in den Grundkörper 140 der Basiseinheit 100 eingeschoben und an diesem Ort fixiert. Der Betätigungshebel 400 ist von unten in die Ausnehmungen 141 eingeschoben. Eine Feder 500 dient dazu, den Betätigungshebel 400 einerseits als Ganzes nach oben hin in den Ausnehmungen 141 zu drücken, andererseits den Betätigungsbereich 440 des Hebels 400 nach vorne in die Ausgangsstellung zu drücken. Dazu weist die Feder 500 einen ersten Schenkel 501 und einen zweiten Schenkel 502 auf, die gemeinsam die Form eines auf dem Kopf stehenden V bilden. Das freie Ende des ersten Schenkels 501 ist an einer Befestigungsstelle 151 derart am Handgriff 150 fixiert, dass die Feder 500 in diesem Bereich weder verschiebbar noch schwenkbar ist. Das freie Ende des zweiten Schenkels 502 greift lose an einer Befestigungsstelle 441 des Betätigungsbereichs 440 an. Die Feder ist dabei so vorgespannt, dass sie sowohl eine Kraftkomponente nach vorne erzeugt, um den Betätigungsbereich 440 des Betätigungshebels 400 nach vorne zu drücken, als auch eine Kraftkomponente nach oben, um die Achse 430 des Betätigungshebels 400 nach oben in die Ausnehmungen 141 hineinzudrücken. Wie in der Fig. 6 besonders gut erkennbar ist, liegt dabei die Grundplatte 410 mit ihrer Oberseite 411 an der Unterkante 142 des Grundkörpers 140 an und bildet dadurch einen Anschlag, der den Bewegungsbereich des Betätigungshebels nach vorne und nach oben hin begrenzt.

Wie insbesondere in den Figuren 4 und 5 erkennbar ist, stehen die Zähne 421 des Betätigungshebels 400 in der Ausgangsstellung sowohl mit der Verzahnung 321 der hier dargestellten zweiten Kolbenstange 320 als auch mit der entsprechenden Verzahnung der ersten Kolbenstange 310 in Eingriff. Die Zähne der beiden Kolbenstangen 310, 320 sind dabei asymmetrisch ausgestaltet. Jeder der Zähne weist eine vordere Flanke auf, die relativ flach zur Vorschubrichtung verläuft, sowie eine hintere Flanke, die beinahe senkrecht zur Vorschubrichtung verläuft und im vorliegenden Beispiel sogar einen Winkel zur Vorschubrichtung einnimmt, der grösser als 90° ist. In anderen Worten sind die Zähne widerhakenartig ausgebildet. Ein Normalenvektor auf der hinteren Flanke weist eine Komponente auf, die nach oben zum Vorschubelement hin weist. Die Zähne 421 auf der Oberseite des Betätigungshebels 400 sind entsprechend komplementär ausgestaltet. Wie aus der Fig. 5 erkennbar ist, sind diese Zähne entlang eines Bogens oder Kreissektors angeordnet, dessen Radius dem Abstand der Zähne zur Schwenkachse entspricht.

Am Führungselement 200 sind zwei Sperrelemente ausgebildet, die auf ihrer Oberseite ebenfalls Zähne aufweisen und von unten her in die Verzahnung in die beiden Kolbenstangen 210, 320 eingreifen. In der Fig. 4 ist hiervon nur das zweite Sperrelement 222 erkennbar. Dieses weist die Form eines einstückig mit dem Führungselement ausgebildeten Federarms auf, dessen eines Ende an der Trennwand 230 befestigt ist und dessen anderes, freies Ende die Zähne aufweist und dadurch als Eingriffselement zum Eingriff mit der Verzahnung 321 der Kolbenstange 320 ausgebildet ist. Der Federarm erzeugt eine nach oben weisende Federkraft, so dass das Sperrelement 222 in Richtung der Verzahnung 321 der Kolbenstange 320 vorbelastet ist. Ein entsprechendes weiteres Sperrelement wirkt auch mit der ersten Kolbenstange 310 zusammen. Durch die asymmetrische Ausgestaltung der Verzahnung der beiden Kolbenstangen erlauben die Sperrelemente zwar nach Art einer Ratschenverbindung eine Vorschubbewegung der Kolbenstange in die Vorschubrichtung, verhindern jedoch eine Rückbewegung in die Gegenrichtung. Selbstverständlich kann das Sperrelement 222 auch anders ausgebildet sein, z.B. nach Art einer federbelasteten, schwenkbaren Sperrklinke.

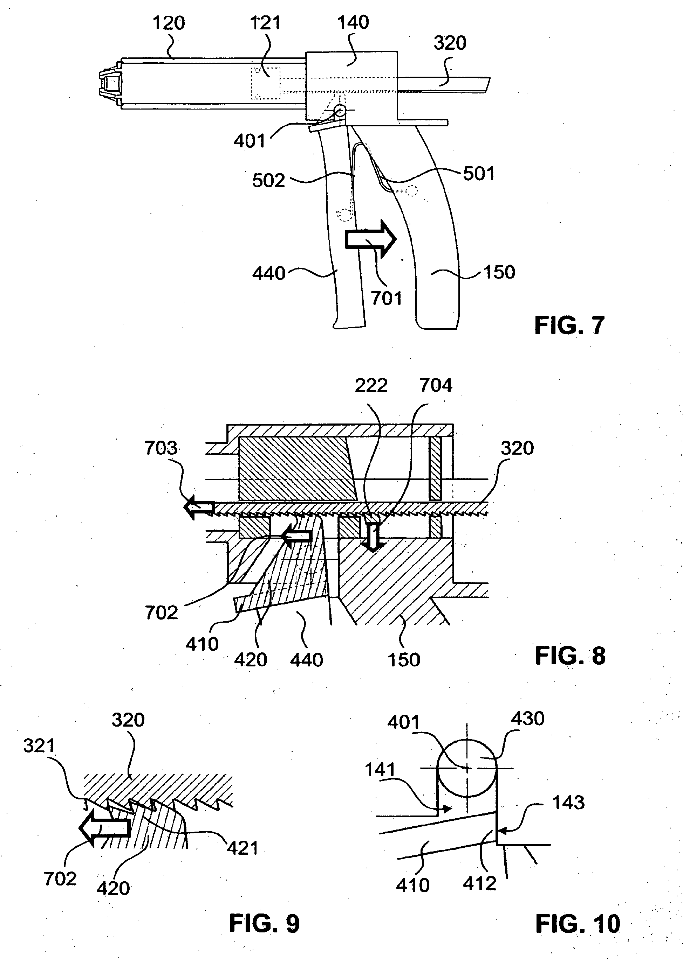

In den Figuren 7 bis 10 ist der Dosierdispenser in einer aktivierten Position illustriert. Der Dosierdispenser wurde nun von einem Benutzer am Handgriff 150 ergriffen, und der Betätigungsbereich 440 des Betätigungshebels 400 wurde mit den Fingern dieser Hand in der Betätigungsrichtung 701 zum Handgriff 150 gezogen. Dadurch bewegen sich die Zähne 421 auf der Oberseite des Betätigungshebels um einen durch die Hebeluntersetzung gegebenen relativ kleinen Betrag in eine Richtung 702, die der Betätigungsrichtung 701 entgegengesetzt ist. Genau genommen führen die Zähne 420 eine kreisbogenförmige Bewegung um die Schwenkachse herum aus. Dabei nehmen die Zähne 421 über die Verzahnung 321 die zweite Kolbenstange 320 und über die entsprechende Verzahnung auch die erste Kolbenstange 310 in der Vorschubrichtung 703 mit. Die Kolbenstange 320 liegt mit ihrem freien distalen Ende an einem Spritzenkolben 121 an, der durch diese Bewegung nach vorne, in die distale Richtung vorgeschoben wird. Hierdurch wird die Komponente, die sich im zweiten Spritzenkörper 120 befindet, aus diesem ausgetragen. Derselbe Vorgang findet entsprechend auch im ersten Spritzenkörper 110 statt. Die austretenden Komponenten können nun einem Mischer zugeführt werden, z. B. dem in der Fig. 1 illustrierten Mischer 600.

Während der Vorschubbewegung der Kolbenstange 320 gleitet die Kolbenstange 320 über das Sperrelement 222 hinweg, wobei das Sperrelement eine Ausweichbewegung in der Richtung 704 ausführt. Wie insbesondere in der Fig. 10 illustriert ist, bleibt die Schwenkachse des Betätigungshebels 400 während der gesamten Austragbewegung in ihrer oberen Stellung, und die Zähne 421 des Betätigungshebels bleiben dementsprechend während der gesamten Vorschubbewegung in Eingriff mit der Verzahnung 321 der Kolbenstange. Die Vorschubbewegung wird dadurch begrenzt, dass die Grundplatte 410 mit ihrer Rückseite 412 an eine Vorderkante 143 des Grundkörpers 140 anstösst, die im Bereich der Ausnehmung 141 ausgebildet ist. Der hierdurch gebildete Anschlag begrenzt den Schwenkbereich des Betätigungshebels 400.

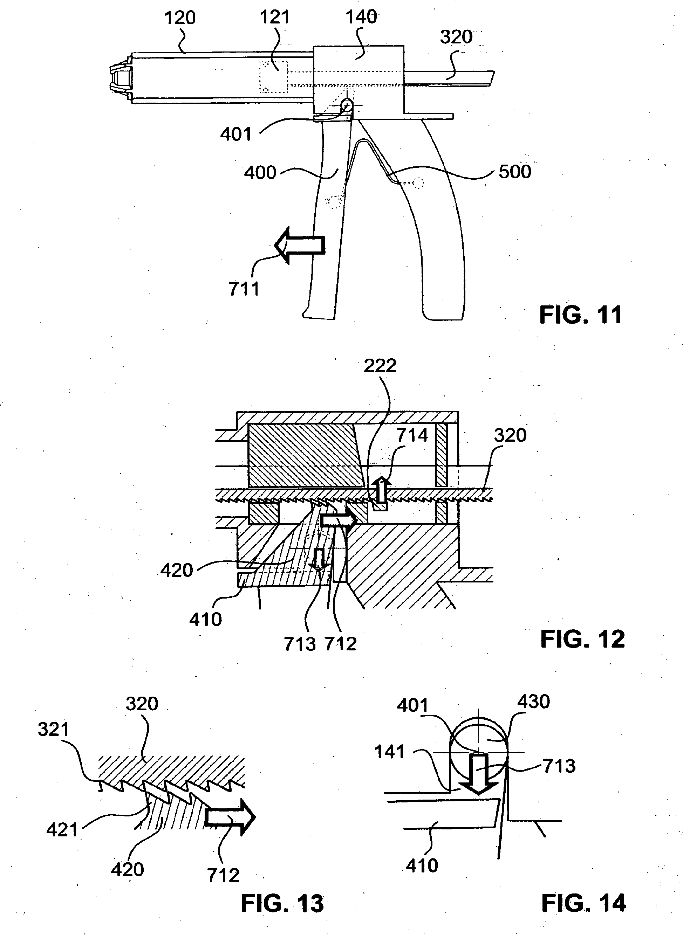

In den Figuren 11 bis 14 ist illustriert, was geschieht, wenn der Betätigungshebel 400 nun wieder losgelassen wird. Durch die Betätigungsbewegung wurde die Feder 500 komprimiert, indem die Schenkel 501, 502 aufeinander zu bewegt wurden. Hierdurch übt die Feder 500 nun eine erhöhte Rückstellkraft auf den Betätigungshebel 400 aus. Diese Rückstellkraft drückt den Betätigungshebel zurück in Richtung seiner Ausgangsstellung. Wie in den Figuren 12 bis 14 illustriert ist, gleiten dabei die Zähne 421 des Betätigungshebels 400 entgegen der Vorschubrichtung über die Verzahnung der Kolbenstangen 310, 320 hinweg. Die Kolbenstangen werden dabei durch die Sperrelemente, die in der Richtung 714 nach oben hin federbelastet sind, an einer Rückbewegung gehindert. Damit die Zähne 421 über die Verzahnung 321 der Kolbenstange hinweg gleiten können, weicht die Schwenkachse 401 des Betätigungshebels 400 in der Richtung 713 innerhalb der Ausnehmung 141 nach unten aus. Auf diese Weise kehrt der Betätigungshebel 400 in die Ausgangstellung der Figuren 3 bis 6 zurück. Der Dosierdispenser ist nun für einen weiteren Austragvorgang bereit.

Während die Erfindung anhand eines Ausführungsbeispiels dargestellt wurde, sind selbstverständlich eine grosse Zahl von Abwandlungen möglich, ohne den Bereich der Erfindung zu verlassen. So kann insbesondere die Verbindung zwischen der Basiseinheit 100 und dem Betätigungshebel 400 anders ausgestaltet sein. Statt in einer nach unten hin offenen Ausnehmung 141 kann die Schwenkachse des Hebels 400 beispielsweise auch in einem nach oben und unten hin geschlossenen, sich vertikal oder schräg zur Vorschubrichtung erstreckenden Langloch aufgenommen sein. Die Rollen von Schwenkachse und Langloch können auch vertauscht sein, indem ein passendes Langloch am Hebel 400 und ein passender Stift an der Basiseinheit 100 ausgebildet sind. Auch bei dieser Ausgestaltung ist der Hebel als Ganzes zwischen einer eingreifenden Stellung, in der die Zähne des Hebels 400 mit der Verzahnung 321 des Vorschubelements 300 in Eingriff stehen, und einer ausgekoppelten Stellung, in der die Zähne 421 des Hebels 400 mit der Verzahnung 321 des Vorschubelements 300 ausser Eingriff stehen, verschiebbar.

Auch die Feder 500 kann selbstverständlich anders ausgestaltet sein und z.B. eine oder mehrere Spiralwindungen aufweisen, um die erzielbare Federkraft zu vergrössem. Statt einer einzigen Feder, die den Betätigungshebel 400 sowohl nach vorne als auch nach oben drückt, können für diese Aufgaben auch getrennte Federn vorgesehen sein.

Selbstverständlich kann auch die Rücklaufsperre auf eine andere Weise als mit den hier dargestellten Sperrelementen realisiert sein. Für geeignete Rücklaufsperren finden sich im Stand der Technik zahlreiche Ausführungsformen.

Ein einschiebbares Führungselement 200, wie es in der oben dargestellten Ausführungsform eingesetzt wurde, ist nicht zwingend, und die Führung des Vorschubelements 300 kann auch auf eine andere Weise als durch einen Einschub realisiert sein. So können Führungsstrukturen z.B. direkt im Grundkörper 140 ausgebildet sein.

Das Vorschubelement selbst kann ebenfalls eine andere Form als hier dargestellt annehmen. Insbesondere braucht die Verzahnung des Vorschubelements nicht an den eigentlichen Kolbenstangen ausgebildet zu sein, sondern es ist auch denkbar, dass ein von den Kolbenstangen getrennt ausgebildeter, sich parallel zu den Kolbenstangen erstreckender und mit diesen verbundener Bereich mit einer Verzahnung vorhanden ist. Hierdurch werden andere, z.B. auch kürzere Bauformen als hier dargestellt ermöglicht.

Im vorliegenden Beispiel sind die Spritzenkörper 110, 120 kartuschenartig verbunden und einstückig mit dem Grundkörper 140 und dem Handgriff 150 ausgebildet. Während dies eine besonders kostengünstige Herstellung ermöglicht, ist auch eine solche Ausgestaltung keineswegs zwingend, und die Spritzenkörper können als Einzelteile oder gemeinsam als Kartusche getrennt vom Grundkörper ausgebildet sein. Die Verbindung zwischen dem Grundkörper und einer solchen Kartusche kann z.B. in der Art realisiert sein, wie sie in der US 5,336,014 angegeben ist.

Auch der Verbindungsbereich 130 am distalen Ende der Spritzenkörper 110, 120 kann selbstverständlich auf eine andere Art als hier dargestellt ausgeführt sein, z.B. über eine einfache Steckverbindung mit Lueranschlüssen, oder ein Mischer kann unmittelbar und unlösbar mit den Spritzenkörper 110, 120 verbunden sein.

Statt zweier Spritzenköper 110, 120 kann auch nur ein einziger Spritzenkörper für den Austrag einer einzigen Komponente vorhanden sein, oder es können auch mehr als zwei parallele Spritzenkörper vorhanden sein. Die Behälter für die Aufnahme der Komponenten brauchen nicht notwendig als Spritzen ausgeführt zu sein, sondern können z.B. auch einen verformbaren Beutel oder ein Behältnis nach Art eines Faltenbalgs umfassen.

Eine Vielzahl weiterer Abwandlungen ist möglich.

### BEZUGSZEICHENLISTE

| | | | |
|---|---|---|---|
| 1 | Dosierdispenser | 320 | zweite Kolbenstange |
| 100 | Basiseinheit | 330 | Verbindungsbereich |
| 110 | erster Spritzenkörper | 331 | Verstärkungswand |
| 120 | zweiter Spritzenkörper | 400 | Betätigungshebel |
| 121 | zweiter Spritzenkolben | 401 | Schwenkachse |
| 130 | Befestigungsbereich | 410 | Grundplatte |
| 140 | Grundkörper | 411 | Oberseite |
| 141 | Ausnehmung | 412 | Rückseite |
| 142 | Unterkante | 420 | Träger |
| 143 | Vorderkante | 421 | Zähne |
| 150 | Handgriff | 430 | Achselement |
| 151 | Befestigungsstelle | 440 | Betätigungsbereich |
| 200 | Führungselement | 441 | Befestigungsstelle |
| 210 | erste Führungsöffnung | 500 | Feder |
| 211 | erste Zugangsöffnung | 501 | erster Federarm |
| 220 | zweite Führungsöffnung | 502 | zweiter Federarm |
| 221 | zweite Zugangsöffnung | 600 | Mischer |
| 222 | Sperrelement | 610 | proximaler Befestigungsbereich |
| 230 | Trennwand | | |
| 300 | Vorschubelement | 620 | distaler Befestigungsbereich |
| 310 | erste Kolbenstange | 701-714 | Richtungen |

## Patentansprüche

1. Austragvorrichtung (1) zum Austragen mindestens einer Komponente, aufweisend
einen Basiskörper (100);
ein gegenüber dem Basiskörper (100) verschiebbar geführtes Vorschubelement (300), das dazu ausgebildet ist, auf einen Behälter mit der Komponente einzuwirken, um die Komponente durch einen Vorschub des Vorschubelements (300) in eine Vorschubrichtung aus dem Behälter auszutragen, wobei das Vorschubelement (300) eine Verzahnung (321) entlang der Vorschubrichtung aufweist;
einen Betätigungshebel (400), der gegenüber dem Basiskörper (100) zwischen einer Ausgangsstellung und einer aktivierten Stellung um eine Schwenkachse schwenkbar ist und einen oder mehrere Zähne (421) aufweist, die geeignet sind, mit der Verzahnung (321) des Vorschubelements (300) in Eingriff zu treten, so dass das Vorschubelement (300) durch eine Schwenkbewegung des Betätigungshebels (400) vorschiebbar ist,
**dadurch gekennzeichnet, dass** der Betätigungshebel (400) als Ganzes gegenüber dem Basiskörper (100) zwischen einer eingreifenden Stellung, in der die Zähne (421) des Betätigungshebels (400) mit der Verzahnung (321) des Vorschubelements (300) in Eingriff stehen, und einer ausgekoppelten Stellung, in der die Zähne (421) des Betätigungshebels (400) mit der Verzahnung (321) des Vorschubelements (300) ausser Eingriff stehen, verschiebbar ist.

2. Austragvorrichtung nach Anspruch 1, wobei sich bei der Bewegung des Betätigungshebels (400) als Ganzes die Lage der Schwenkachse verändert.

3. Austragvorrichtung nach Anspruch 1 oder 2, wobei der Betätigungshebel eine starre, formstabile Einheit bildet.

4. Austragvorrichtung nach einem der vorhergehenden Ansprüche, wobei der Betätigungshebel (400) bezüglich der Schwenkbewegung in Richtung der Ausgangsstellung federbelastet ist.

5. Austragvorrichtung nach einem der vorhergehenden Ansprüche, wobei der Betätigungshebel (400) als Ganzes in Richtung der eingreifenden Stellung federbelastet ist.

6. Austragvorrichtung nach einem der vorhergehenden Ansprüche, wobei die Austragvorrichtung eine Feder (500) umfasst, welche eine erste Kraftkomponente erzeugt, um den Betätigungshebel (400) bezüglich der Schwenkbewegung in Richtung der Ausgangsstellung zu belasten, und welche eine zweite Kraftkomponente erzeugt, um den Betätigungshebel als Ganzes in Richtung der eingreifenden Stellung zu belasten.

7. Austragvorrichtung nach einem der vorhergehenden Ansprüche, wobei die Austragvorrichtung eine Rücklaufsperreinrichtung (222) aufweist, welche eine Bewegung des Vorschubelements (300) entgegen der Vorschubrichtung behindert, wenn der Betätigungshebel (400) von der aktivierten Stellung in die Ausgangsstellung zurückbewegt wird.

8. Austragvorrichtung nach einem der vorhergehenden Ansprüche, wobei die Verzahnung (321) des Vorschubelements (300) aus asymmetrisch ausgebildeten Zähnen gebildet ist, wobei die Zähne eine vordere Flanke aufweisen, die in die Vorschubrichtung weist, und eine hintere Flanke aufweisen, die in eine der Vorschubrichtung entgegengesetzte Richtung weist, wobei die vordere Flanke einen flacheren Winkel zur Vorschubrichtung einnimmt als die hintere Flanke.

9. Austragvorrichtung nach Anspruch 8, wobei die hintere Flanke einen Winkel zur Vorschubrichtung einnimmt, der grösser als 90° ist.

10. Austragvorrichtung nach einem der vorhergehenden Ansprüche, wobei der Basiskörper (100) einen pistolengriffartigen Handgriff (150) aufweist, der dazu ausgebildet ist, mit einer Hand eines Benutzers ergriffen zu werden, und wobei der Betätigungshebel (400) einen Griffbereich (440) aufweist, der dazu ausgebildet ist, mit einem oder mehreren Fingern dieser Hand in Richtung des Handgriffs (150) gezogen zu werden, um den Betätigungshebel (400) von der Ausgangsstellung in die aktivierte Stellung zu verschwenken.

11. Austragvorrichtung nach Anspruch 10, wobei der Betätigungshebel (400) um eine Schwenkachse (401) verschwenkbar ist, und wobei die Zähne (421) des Betätigungshebels (400) bezüglich der Schwenkachse an einer dem Griffbereich (440) gegenüberliegenden Oberseite des Betätigungshebels (400) angeordnet sind und die Verzahnung (321) des Vorschubelements (300) an einer zum Handgriff (150) hin weisenden Unterseite des Vorschubelements (300) angeordnet ist.

12. Austragvorrichtung nach einem der vorhergehenden Ansprüche, wobei ein Achselement (430) des Betätigungshebels (400) in mindestens einem Langloch (141) des Basiskörpers (100) verschiebbar geführt ist, um den Betätigungshebel (400) als Ganzes zwischen der eingreifenden Stellung und der ausgekoppelten Stellung zu verschieben.

13. Austragvorrichtung nach einem der vorhergehenden Ansprüche, welche mindestens einen zylindrischen Spritzenkörper (110; 120) zur Aufnahme der mindestens einen Komponente und mindestens einen im Spritzenkörper (110; 120) verschiebbaren Spritzenkolben (121) umfasst, und wobei der Spritzenkolben (121) durch das Vorschubelement (300) im Spritzenkörper (110; 120) vorschiebbar ist, um die Komponente auszutragen.

14. Austragvorrichtung nach Anspruch 13, wobei der Spritzenkörper (110; 120) integral mit dem Basiskörper (100) ausgebildet ist.

15. Austragvorrichtung nach Anspruch 13 oder 14 mit mindestens einem ersten zylindrischen Spritzenkörper (110), einem darin verschiebbaren ersten Spritzenkolben, einem parallel zum ersten Spritzenkörper angeordneten zweiten zylindrischen Spritzenkörper (120) und einem darin verschiebbaren zweiten Spritzenkolben (121), um jeweils eine Komponente aus jedem der Spritzenkörper (110, 120) auszutragen.

16. Austragvorrichtung nach Anspruch 15, wobei das Vorschubelement umfasst:
eine erste Kolbenstange (310), die mit einem distalen Ende auf den ersten Spritzenkolben wirkt;
eine zweite Kolbenstange (320), die mit einem distalen Ende auf den zweiten Spritzenkolben (121) wirkt;
einen Verbindungsbereich (330) zwischen den Kolbenstangen, der in einem proximalen Endbereich der Kolbenstangen ausgebildet ist, um die Kolbenstangen zu verbinden;
wobei die Verzahnung (321) des Vorschubelements sowohl auf der ersten als auch auf der zweiten Kolbenstange (310, 320) ausgebildet ist.

17. Austragvorrichtung nach einem der vorhergehenden Ansprüche, welche ausserdem ein separat vom Basiskörper (100) ausgebildetes und am Basiskörper (100) befestigbares Führungselement (200) aufweist, in dem das Vorschubelement (300) verschiebbar geführt ist.

## Claims

1. A dispensing device (1) for dispensing at least one component, comprising:
a base body (100);
an advancing element (300), which is guided displaceably relative to the base body (100) and is designed to act on a container containing the component such that the component is dispensed from the container by means of an advance of the advancing element (300) in a direction of advance, wherein the advancing element (300) has a toothing (321) along the direction of advance;
an actuating lever (400), which is pivotable relative to the base body (100) between an initial position and an activated position about a pivot axis and has one or more teeth (421), which are suitable for engaging with the toothing (321) of the advancing element (300), such that the advancing element (300) can be advanced by a pivoting movement of the actuating lever (400),
**characterised in that** the actuating lever (400) as a whole is displaceable relative to the base body (100) between an engagement position, in which the teeth (421) of the actuating lever (400) are in engagement with the toothing (321) of the advancing element (300), and a decoupled position, in which the teeth (421) of the actuating lever (400) are disengaged from the toothing (321) of the advancing element (300).

2. The dispensing device as claimed in claim 1, wherein the position of the pivot axis changes during the movement of the actuating lever (400) as a whole.

3. The dispensing device as claimed in claim 1 or 2, wherein the actuating lever forms a rigid, dimensionally stable unit.

4. The dispensing device as claimed in one of the preceding claims, wherein the actuating lever (400), with respect to the pivoting movement, is spring-loaded in the direction of the initial position.

5. The dispensing device as claimed in one of the preceding claims, wherein the actuating lever (400) as a whole is spring-loaded in the direction of the engagement position.

6. The dispensing device as claimed in one of the preceding claims, wherein the dispensing device comprises a spring (500), which generates a first force component in order to load the actuating lever (400) with respect to the pivoting movement in the direction of the initial position, and which generates a second force component in order to load the actuating lever as a whole in the direction of the engagement position.

7. The dispensing device as claimed in one of the preceding claims, wherein the dispensing device has a return stop mechanism (222), which impedes a movement of the advancing element (300) counter to the direction of advance when the actuating lever (400) is moved back from the activated position to the initial position.

8. The dispensing device as claimed in one of the preceding claims, wherein the toothing (321) of the advancing element (300) is composed of asymmetrically configured teeth, wherein the teeth have a front flank, which faces in the direction of advance, and a rear flank, which faces in a direction counter to the direction of advance, wherein the front flank assumes a shallower angle to the direction of advance than the rear flank.

9. The dispensing device as claimed in claim 8, wherein the rear flank assumes an angle of more than 90° to the direction of advance.

10. The dispensing device as claimed in one of the preceding claims, wherein the base body (100) has a handle (150) shaped like a pistol grip and designed to be grasped in one hand by a user, and wherein the actuating lever (400) has a grip area (440) designed to be pulled by one or more fingers of this hand in the direction of the handle (150), in order to pivot the actuating lever (400) from the initial position to the activated position.

11. The dispensing device as claimed in claim 10, wherein the actuating lever (400) is pivotable about a pivot axis (401), and wherein the teeth (421) of the actuating lever (400) are arranged, with respect to the pivot axis, on a top face of the actuating lever (400) lying opposite the grip area (440), and the toothing (321) of the advancing element (300) is arranged on an underside of the advancing element (300) facing toward the handle (150).

12. The dispensing device as claimed in one of the preceding claims, wherein a shaft element (430) of the actuating lever (400) is guided displaceably in at least one oblong hole (141) of the base body (100), in order to move the actuating lever (400) as a whole between the engagement position and the decoupled position.

13. The dispensing device as claimed in one of the preceding claims, which comprises at least one cylindrical syringe body (110; 120) for receiving the at least one component and at least one syringe plunger (121) movable in the syringe body (110; 120), and wherein the syringe plunger (121) can be pushed forward in the syringe body (110; 120) by the advancing element (300) in order to dispense the component.

14. The dispensing device as claimed in claim 13, wherein the syringe body (110; 120) is designed integrally with the base body (100).

15. The dispensing device as claimed in claim 13 or 14, with at least a first cylindrical syringe body (110), a first syringe plunger movable therein, a second cylindrical syringe body (120) arranged parallel to the first syringe body, and a second syringe plunger (121) movable in the second cylindrical syringe body (120), in order to dispense a respective component from each of the syringe bodies (110, 120).

16. The dispensing device as claimed in claim 15, wherein the advancing element comprises:
a first plunger rod (310), which acts with a distal end on the first syringe plunger;
a second plunger rod (320), which acts with a distal end on the second syringe plunger (121);
a connection area (330) between the plunger rods, which connection area (330) is formed in a proximal end area of the plunger rods in order to connect the plunger rods;
wherein the toothing (321) of the advancing element is formed both on the first and also on the second plunger rod (310, 320).

17. The dispensing device as claimed in one of the preceding claims, additionally having a guide element (200), which is designed separately from the base body (100) and can be secured on the base body (100), and in which the advancing element (300) is guided displaceably.

## Revendications

1. Dispositif de distribution (1) pour la distribution d'au moins un composant, comprenant
un corps de base (100) ;
un élément d'avance (300) guidé de manière déplaçable par rapport au corps de base (100), lequel élément d'avance est réalisé pour agir sur un récipient comprenant le composant, afin de distribuer le composant à partir du récipient par une avance de l'élément d'avance (300) dans un sens d'avance, l'élément d'avance (300) comprenant une denture (321) le long du sens d'avance ;
un levier d'actionnement (400) qui peut être pivoté autour d'un axe de pivotement par rapport au corps de base (100) entre une position initiale et une position activée et comprend une ou plusieurs dents (421) qui sont appropriées pour entrer en prise avec la denture (321) de l'élément d'avance (300), de telle sorte que l'élément d'avance (300) soit déplaçable par un mouvement de pivotement du levier d'actionnement (400), **caractérisé en ce que** le levier d'actionnement (400) dans son ensemble est déplaçable par rapport au corps de base (100) entre une position d'entrée en prise, dans laquelle les dents (421) du levier d'actionnement (400) sont en prise avec la denture (321) de l'élément d'avance (300), et une position désaccouplée, dans laquelle les dents (421) du levier d'actionnement (400) ne sont pas en prise avec la denture (321) de l'élément d'avance (300).

2. Dispositif de distribution selon la revendication 1, dans lequel la position de l'axe de pivotement change lors du mouvement du levier d'actionnement (400) dans son ensemble.

3. Dispositif de distribution selon la revendication 1 ou 2, dans lequel le levier d'actionnement forme une unité rigide de forme stable.

4. Dispositif de distribution selon l'une quelconque des revendications précédentes, dans lequel le levier d'actionnement (400) est sollicité par ressort dans la direction de la position initiale par rapport au mouvement de pivotement.

5. Dispositif de distribution selon l'une quelconque des revendications précédentes, dans lequel le levier d'actionnement (400) dans son ensemble est sollicité par ressort dans la direction de la position d'entrée en prise.

6. Dispositif de distribution selon l'une quelconque des revendications précédentes, le dispositif de distribution comportant un ressort (500), lequel génère une composante de force afin de solliciter le levier d'actionnement (400) dans la direction de la position initiale par rapport au mouvement de pivotement, et lequel génère une deuxième composante de force afin de solliciter le levier d'actionnement dans son ensemble dans la direction de la position d'entrée en prise.

7. Dispositif de distribution selon l'une quelconque des revendications précédentes, le dispositif de distribution comprenant un dispositif de blocage de retour (222), lequel empêche un mouvement de l'élément d'avance (300) en sens inverse au sens d'avance lorsque le levier d'actionnement (400) est ramené de la position activée à la position initiale.

8. Dispositif de distribution selon l'une quelconque des revendications précédentes, dans lequel la denture (321) de l'élément d'avance (300) est formée à partir de dents réalisées de manière asymétrique, dans lequel les dents présentent un flanc avant qui est orienté dans le sens d'avance et un flanc arrière qui est orienté dans un sens opposé au sens d'avance, et dans lequel le flanc avant présente un angle plus plat par rapport au sens d'avance que le flanc arrière.

9. Dispositif de distribution selon la revendication 8, dans lequel le flanc arrière présente un angle par rapport au sens d'avance qui est supérieur à 90°.

10. Dispositif de distribution selon l'une quelconque des revendications précédentes, dans lequel le corps de base (100) comprend une poignée (150) de type pistolet, laquelle est réalisée pour être saisie par une main d'un utilisateur, et dans lequel le levier d'actionnement (400) comprend une région de préhension (440), laquelle est réalisée pour être tirée par un ou plusieurs doigts de cette main dans la direction de la poignée (150) afin de pivoter le levier d'actionnement (400) de la position initiale à la position activée.

11. Dispositif de distribution selon la revendication 10, dans lequel le levier d'actionnement (400) peut être pivoté autour d'un axe de pivotement (401), et dans lequel les dents (421) du levier d'actionnement (400) sont disposées, par rapport à l'axe de pivotement, sur un côté supérieur, opposé à la région de préhension (440), du levier d'actionnement (400), et la denture (321) de l'élément d'avance (300) est disposée sur un côté inférieur, tourné vers la poignée (150), de l'élément d'avance (300).

12. Dispositif de distribution selon l'une quelconque des revendications précédentes, dans lequel un élément d'axe (430) du levier d'actionnement (400) est guidé de manière déplaçable dans au moins un trou oblong (141) du corps de base (100) afin de déplacer le levier d'actionnement (400) dans son ensemble entre la position d'entrée en prise et la position désaccouplée.

13. Dispositif de distribution selon l'une quelconque des revendications précédentes, lequel comporte au moins un corps de seringue cylindrique (110 ; 120) destiné à recevoir l'au moins un composant et au moins un piston de seringue (121) déplaçable dans le corps de seringue (110 ; 120), et dans lequel le piston de seringue (121) peut être avancé dans le corps de seringue (110 ; 120) par l'élément d'avance (300) afin de distribuer le composant.

14. Dispositif de distribution selon la revendication 13, dans lequel le corps de seringue (110 ; 120) est réalisé d'un seul tenant avec le corps de base (100).

15. Dispositif de distribution selon la revendication 13 ou 14, comprenant au moins un premier corps de seringue cylindrique (110), un premier piston de seringue déplaçable dans celui-ci, un deuxième corps de seringue cylindrique (120) disposé parallèlement au premier corps de seringue et un deuxième piston de seringue (121) déplaçable dans celui-ci afin de distribuer un composant respectif à partir de chacun des corps de seringue (110, 120).

16. Dispositif de distribution selon la revendication 15, dans lequel l'élément d'avance comporte :
une première tige de piston (310), laquelle agit par une extrémité distale sur le premier piston de seringue ;
une deuxième tige de piston (320), laquelle agit par une extrémité distale sur le deuxième piston de seringue (121) ;
une région de liaison (330) entre les tiges de piston, laquelle est réalisée dans une région d'extrémité proximale des tiges de piston afin de relier les tiges de piston ;
dans lequel la denture (321) de l'élément d'avance est réalisée à la fois sur la première et sur la deuxième tige de piston (310, 320).

17. Dispositif de distribution selon l'une quelconque des revendications précédentes, lequel comprend en outre un élément de guidage (200) réalisé séparément du corps de base (100) et pouvant être fixé au corps de base (100), dans lequel élément de guidage l'élément d'avance (300) est guidé de manière déplaçable.
